# EUROPÄISCHE PATENTSCHRIFT

(11) **EP 1 143 181 B1**
(45) Veröffentlichungstag und Bekanntmachung des Hinweises auf die Patenterteilung: **08.11.2006**
(21) Anmeldenummer: 01108376.3
(22) Anmeldetag: 03.04.2001
(51) Int. Cl.: F16L 9/147, B01L 11/00, B01L 3/02, G01N 35/10

(54) **Verfahren zur Herstellung eines Metallrohrs mit einer innenseitigen Kunststoffverkleidung**
Method for producing a metal pipe with internal plastics covering
Procédé de production d'un tuyau métallique avec recouvrement interne en matière plastique

(30) Priorität: 08.04.2000 DE 10017606
(43) Veröffentlichungstag der Anmeldung: 10.10.2001
(73) Patentinhaber: Möller Feinmechanik GmbH & Co. KG, 36043 Fulda (DE)
(72) Erfinder: Frank, Michael, 36137 Grossenlüder (DE); Hirmer, Frank, 36110 Schlitz (DE)
(74) Vertreter: Hebing, Norbert

(56) Entgegenhaltungen:
- EP-A- 0 884 575
- WO-A-92/22379
- AU-A- 3 788 472
- DE-U- 29 780 368
- GB-A- 449 617
- US-A- 5 212 992
- US-A- 5 468 453

## Beschreibung

Die Erfindung betrifft die Herstellung eines Metallrohres mit einer innenseitigen, das Anhaften von Flüssigkeiten reduzierenden, fest in dem Metallrohr angeordneten Kunststoffverkleidung, in Form einer Kanüle mit einer Verkleidung, insbesondere einer PTFE-Verkleidung.

Metallrohre müssen oftmals innenseitig mit einer Kunststoffverkleidung versehen werden. Das ist beispielsweise bei Kanülen für Probenehmer der Fall. Die Beschichtung dient dabei dazu, ein Anhaften von Resten einer genommenen Probe zu verhindern, so dass es nicht zu Verschleppungen zwischen verschiedenen Proben kommen kann. Üblicherweise erzeugt man die hierfür erforderlichen Kunststoffverkleidungen durch flüssigen Kunststoff, den man durch das Metallrohr fließen lässt und der dabei für eine Beschichtung der Innenmantelfläche sorgt. Metallrohre der vorstehenden Art müssen mit anderen Einrichtungen verbunden werden, beispielsweise mit einer Messeinrichtung, in die die aufgenommene Probe durch die Kanüle hindurchfließt. Das erfordert einen Schlauch, der hierzu an die Kanüle angeschlossen werden muss. Zwangsläufig entsteht durch Anschlüsse ein Totvolumen, was Ursache für Materialverschleppungen sein kann. Man ist deshalb bestrebt, die Zahl der Anschlüsse möglichst klein zu halten.

In der gattungsbildenden US 5,468,453 ist ein Verfahren zur Herstellung eines Metallrohres mit einer innenseitigen, das Anhaften von Flüssigkeiten reduzierenden, fest in dem Metallrohr angeordneten Kunststoffverkleidung, nämlich einer Kanüle mit einer PTFE-Verkleidung, beschrieben, wobei in das Metallrohr ein Kunststoffschlauch eingeführt und das Metallrohr anschließend im vorderen Bereich durch Kaltverformen im Durchmesser reduziert wird.

Die Verbindung der Spitzen von Kunststoffschlauch und Metallrohr erfolgt mit einem Kleber.

Gemäß der WO 92/22379 wird zunächst das Metallrohr verengt und dann der Kunststoffschlauch eingezogen. Dieser wird anschließend erwärmt, so dass er sich dauerhaft ausdehnt.

Die AU-A-37 884 72 beschreibt ein Verfahren zur Herstellung eines Bewässenungsrohres, wonach ein innenseitiges PE-Rohr in einem außenseitigen, kaltverformten Aluminiumrohr durch Reibschluss fixiert wird.

Der Erfindung liegt das Problem zugrunde, ein Verfahren darzustellen, mit dem ein Metallrohr der eingangs genannten Art möglichst einfach hergestellt werden kann.

Dieses Problem wird erfindungsgemäß dadurch gelöst, dass die Durchmesserreduzierung so weit erfolgt, dass der Kunststoffschlauch dort reibschlüssig in dem Metallrohr gehalten ist.

Ein solches Verfahren ist sehr kostengünstig ausführbar und führt zu Metallrohren mit optimaler Innenoberfläche, welche durch den herausgeführten Kunststoffschlauch mit nur einem einzigen Schlauchübergang an eine Einrichtung, beispielsweise ein Messsystem, angeschlossen werden können.

Eine vorteilhafte Weiterbildung des Verfahrens besteht darin, dass das Kaltverformen durch Hämmern erfolgt. Hierdurch kann man sich optimal den Materialeigenschaften des Metallrohres und des Kunststoffschlauches anpassen.

Die Spitze des Metallrohres schließt mit dem darin eingesetzten Schlauch bündig ab, wenn nach dem Kaltverformen das vordere Ende des Metallrohres spanabhebend bearbeitet wird, um einen bündigen Abschluss des Metallrohres und des Kunststoffschlauches herbeizuführen.

Auf diese Weise wird eine Kanüle gebildet, deren Innenverkleidung durch einen reibschlüssig in dem Metallrohr gehaltenen, am vorderen Ende des Metallrohres mit diesem bündig abschließenden und am anderen Ende aus ihm herausführenden Kunststoffschlauch gebildet ist.

Ein solches Metallrohr kann über den aus ihm herausführenden Kunststoffschlauch unmittelbar beispielsweise mit einer Messeinrichtung verbunden werden, so dass lediglich zwischen der Messeinrichtung und dem Schlauch ein Anschluss als Schnittstelle vorhanden sein muss. Dadurch ist die Anzahl der Schnittstellen so gering wie möglich, so dass die Gefahr von Verschleppungen durch Toträume entsprechend gering ist. Durch die Erfindung können alle Vorteile eines Kunststoffschlauches genutzt werden, ohne dass auf die Stabilität und Geometrie einer Metallkanüle verzichtet werden muss. Durch Auswahl des optimalen Kunststoffes für den Kunststoffschlauch, insbesondere PTFE, erreicht man eine hohe Innenoberflächenqualität und hohe Chemikalienbeständigkeit.

Für den Einsatz als Stahlkanüle in Probenehmern ist es vorteilhaft, wenn die Durchmesserreduzierung sich in etwa über 1/4 der Länge des Metallrohres ersteckt.

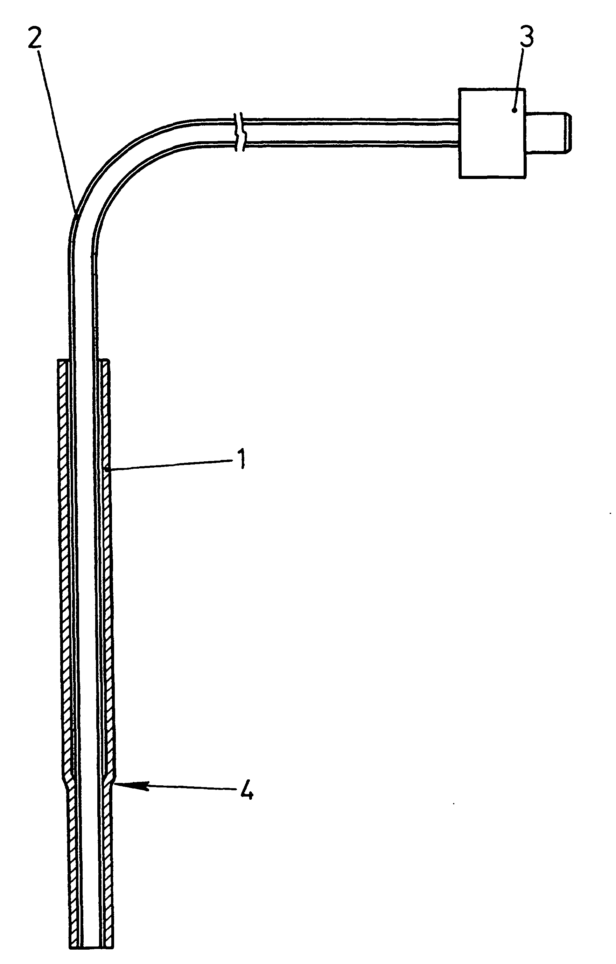

Die Erfindung lässt verschiedene Ausführungsformen zu. Eine davon ist in der Zeichnung dargestellt und wird nachfolgend beschrieben.

Die Zeichnung zeigt im Schnitt ein Metallrohr 1 aus Stahl, bei dem es sich um eine Kanüle für einen Probenehmer handelt. In dieses Metallrohr führt von oben her als Verkleidung ein Kunststoffschlauch 2 aus PTFE hinein, der an seinem oberen Ende einen Steckanschluss 3 aufweist, mit dem er beispielsweise mit einer nicht gezeigten Messeinrichtung verbunden werden kann. Das Metallrohr 1 hat im unteren Bereich eine durch Hämmern erzeugte Durchmesserreduzierung 4, durch die der Kunststoffschlauch 2 reibschlüssig in dem Metallrohr 1 gehalten ist.

### Bezugszeichenliste

- 1: Metallrohr
- 2: Kunststoffschlauch
- 3: Steckanschluss
- 4: Durchmesserreduzierung

## Patentansprüche

1. Verfahren zur Herstellung eines Metallrohres (1) mit einer innenseitigen, das Anhaften von Flüssigkeiten reduzierenden, fest in dem Metallrohr angeordneten Kunststoffverkleidung (2), wobei es sich bei dem Metallrohr (1) um eine Kanüle und bei der Kunstoffverkleidung (2) insbesondere um eine PTFE-Verkleidung handelt, wobei in das Metallrohr (1) ein Kunststoffschlauch (2) eingeführt und das Metallrohr (1) anschließend im vorderen Bereich (4) durch Kaltverformen im Durchmesser reduziert wird, **dadurch gekennzeichnet, dass** die Durchmesserreduzierung (4) so weit erfolgt, dass der Kunststoffschlauch (2) dort reibschlüssig in dem Metallrohr (1) gehalten ist.

2. Verfahren nach Anspruch 1, **dadurch gekennzeichnet, dass** das Kaltverformen durch Hämmern erfolgt.

3. Verfahren nach den Ansprüchen 1 oder 2, **dadurch gekennzeichnet, dass** nach dem Kaltverformen das vordere Ende des Metallrohres (1) spanabhebend bearbeitet wird, um einen bündigen Abschluss des Metallrohres (1) und des Kunststoffschlauches (2) herbeizuführen.

## Claims

1. A method for manufacturing a metal tube (1) with an inner plastic lining (2) that is rigidly arranged in the metal tube and reduces the adherence of liquids, wherein the metal tube (1) consists of a cannula and the plastic lining (2) consists, in particular, of a PTFE lining, and wherein a plastic tube (2) is inserted into the metal tube (1) and the diameter of the metal tube (1) is subsequently reduced in the front region (4) by means of cold forming, **characterized in that** the diameter (4) is reduced to such a degree that the plastic tube (2) is frictionally held in the metal tube (1) at this location.

2. The method according to Claim 1, **characterized in that** the cold forming process is carried out by means of hammering.

3. The method according to Claim 1 or 2, **charactarized in** that the front end of the metal tube (1) is machined after the cold forming process in order to produce a flush end of the metal tube (1) and the plastic tube (2).

## Revendications

1. Procédé de fabrication d'un tuyau métallique (1) comportant un habillage intérieur en matière plastique (2) réduisant l'adhérence de liquides et disposé fixement dans le tuyau métallique, sachant qu'il s'agit en ce qui concerne le tuyau métallique d'une canule et, en ce qui concerne l'habillage en matière plastique, notamment d'un habillage en PTFE, dans lequel un tuyau en matière plastique (2) est introduit dans le tuyau métallique (1) et le tuyau métallique (1) est ensuite réduit au niveau de son diamètre dans sa partie avant (4) par déformation à froid, **caractérisé en ce que** la réduction de diamètre (4) a lieu jusqu'à ce que le tuyau en matière plastique (2) y soit maintenu par correspondance de frottement dans le tuyau métallique (1).

2. Procédé selon la revendication 1, **caractérisé en ce que** la déformation à froid a lieu par martelage.

3. Procédé selon les revendications 1 ou 2, **caractérisé en ce qu'**après la déformation à froid, l'extrémité avant du tuyau métallique (1) est usinée par enlèvement de copeaux afin d'aboutir à un rattachement à fleur du tuyau métallique (1) et du tuyau en matière plastique (2).
